Europäisches Patentamt

European Patent Office

Office européen des brevets

(19)

(11) Veröffentlichungsnummer: **0 011 749**
**B1**

(12) **EUROPÄISCHE PATENTSCHRIFT**

(45) Veröffentlichungstag der Patentschrift:
20.01.82

(51) Int. Cl.³: **H 03 K 13/34**, H 04 L 1/10,
G 06 F 11/10

(21) Anmeldenummer: **79104403.5**

(22) Anmeldetag: **08.11.79**

(54) Schaltungsanordnung zur Korrektur von Daten.

(30) Priorität: **28.11.78 DE 2851436**

(43) Veröffentlichungstag der Anmeldung:
**11.06.80 Patentblatt 80/12**

(45) Bekanntmachung des Hinweises auf die Patenterteilung:
**20.01.82 Patentblatt 82/3**

(84) Benannte Vertragsstaaten:
**BE CH FR GB IT LU NL**

(56) Entgegenhaltungen:
DE-B-1 449 334
US-A-3 227 999
US-A-3 447 132
US-A-3 469 236
US-A-3 571 795
US-A-3 593 282
US-A-3 605 090
US-A-3 718 905
US-A-3 728 678
US-A-3 873 971

P. Bocker "Datenübertragung"
Band II,
1977, SPRINGER, Berlin,
Heidelberg, New York          →

(73) Patentinhaber: **SIEMENS AKTIENGESELLSCHAFT Berlin
und München, Postfach 22 02 61, D-8000 München 22 (DE)**

(72) Erfinder: **Markwitz, Wernhard, Dipl.-Ing., Thalkirchner
Strasse 107, D-8000 München 70 (DE)**

→ **IEEE TRANSACTIONS ON INFORMATION
THEORY, Band IT-14, Nr. 5
September 1968,
New York
A. KOHLENBERG et al. "Convolutional
Coding for Channels With Memory"
Seiten 618 bis 626**

**R.W. LUCKY et al. "Principles of
Data Communication"
1968, McGRAW-HILL, New York,
Kapitel 12, Seiten 375 bis 410**

**W.W. PETERSON "Prüfbare und Korrigierbare
Codes"
1967, R. OLDENBOURG, München, Wien
Kapitel 12, Seiten 287 bis 310**

## Schaltungsanordnung zur Korrektur von Daten

Die Erfindung bezieht sich auf eine Schaltungsanordnung zur Korrektur von Daten, wobei Informationsbits einem sendeseitigen Schieberegister zugeführt werden, das über mehrere Abgriffe an eine sendeseitige Paritätsstufe angeschlossen ist, die gemäss einem rekurrenten Code codierte sendeseitige Paritätsbits abgibt, wobei Folgen von Informationsbits und Paritätsbits zur Empfangsseite übertragen und mit Hilfe eines Syndromregisters und einer Majoritätsstufe ein Korrektursignal gewonnen und einzelne Informationsbits korrigiert werden.

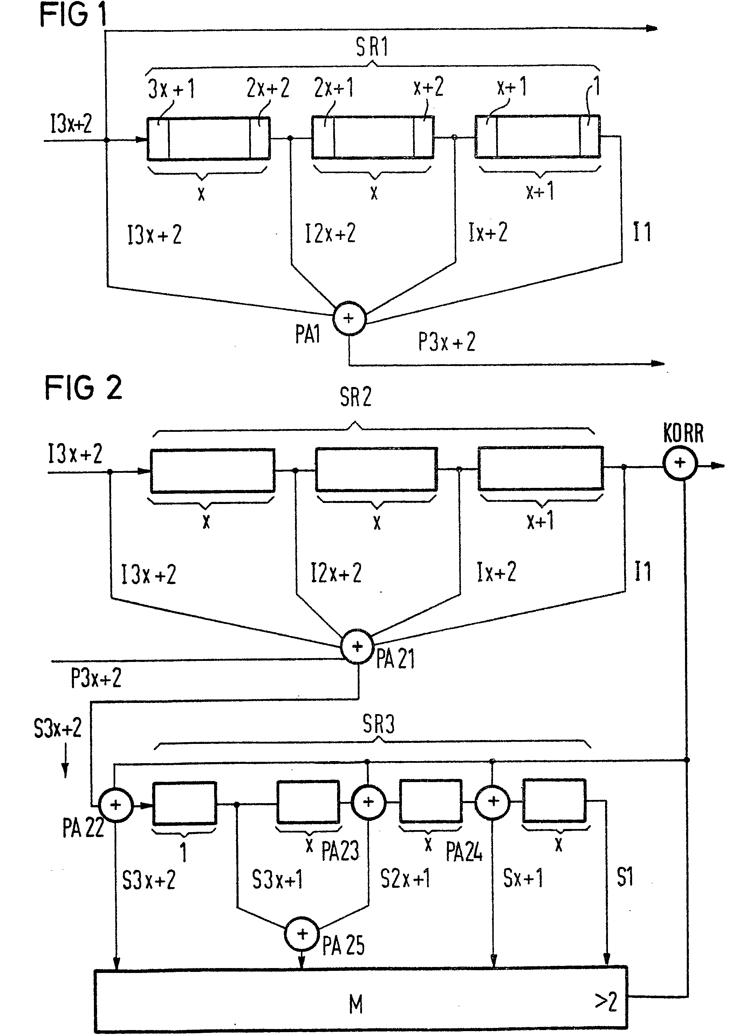

Die Fig. 1 und 2 beziehen sich auf eine bekannte Schaltungsanordnung, die in der Zeitschrift „IEEE Transactions on Information Theory," Bd. IT-14. Nr. 5, Sept. 1968, Seiten 618 bis 620 beschrieben ist. Die Fig. 1 zeigt das sendeseitig angeordnete Schieberegister SR1, dem eingangs eine Folge von Informationsbits I zugeführt wird. Dieses Schieberegister hat mehrere Abgriffe. Über den letzten Abgriff wird im dargestellten Zeitpunkt das Informationsbit I1 abgegeben. Ab diesem Abgriff sind entgegengesetzt zur Schieberichtung $x+1$ Zellen des Schieberegisters vorgesehen. Dabei bezeichnet die Zahl x die Anzahl der Informationsbits, die zu einer einzigen Bündelstörung gehören. Über den zweiten Abgriff wird im betrachteten Zeitpunkt das Informationsbit $Ix+2$ abgegeben. Im Anschluss daran sind entgegengesetzt zur Schieberichtung x Zellen vorgesehen und über den dritten Abgriff wird im betrachteten Zeitpunkt das Informationsbit $I2x+2$ abgegeben. Ab diesem Abgriff sind entgegengesetzt zur Schieberichtung noch einmal x Zellen angeordnet. Am Eingang des Schieberegisters liegt somit im betrachteten Zeitpunkt das Informationsbit $I3x+2$. Die einzelnen Zellen des Schieberegisters SR1 sind mit wachsenden Nummern entgegengesetzt zur Schieberichtung nummeriert, beginnend mit der Nummer 1 bis zur Nummer $x+1$ eines ersten Teiles des Schieberegisters. Die erste Zelle des zweiten Teiles hat die Nummer $x+2$ und die letzte Zelle des zweiten Teiles hat die Nummer $2x+1$. Die erste Zelle des dritten Teiles hat die Nummer $2x+2$ und die letzte Zelle des dritten Teiles hat die Nummer $3x+1$. Die Abgriffe des Schieberegisters sind an die Paritätsstufe PA1 angeschlossen, über deren Ausgang das Paritätsbit $P3x+2$ abgegeben wird. Während der Dauer einer Bündelstörung werden somit x Informationsbit und x Paritätsbit abgegeben.

Fig. 2 zeigt die Empfangsseite. Das Schieberegister SR2 gleicht dem sendeseitigen Schieberegister SR1. Die Abgriffe sind wieder derart gewählt, dass zum betrachteten Zeitpunkt die gleichen Informationsbits wie auf der Sendeseite abgegriffen werden. Mit Hilfe dieser Informationsbits wird ein empfangsseitiges Paritätsbit errechnet und mit dem empfangenen Paritätsbit $P3x+2$ verglichen. Dieser Vergleich wird mit Hilfe der Paritätsstufe PA21 durchgeführt, die als Ergebnis dieses Vergleichs das Syndrom $S3x+2$ abgibt.

Das Syndromregister SR3 besitzt wie die Register SR1 und SR2 insgesamt $3x+1$ Zellen. Über die Abgriffe werden zum dargestellten Zeitpunkt die Syndrome S1, $Sx+1$, $S2x+1$, $S3x+1$, $S3x+2$ abgegeben. Die Syndrome $S2x+1$ und $S3x+1$ werden der Paritätsstufe PA25 zugeführt. Der Ausgang dieser Paritätsstufe ist an die Majoritätsstufe M angeschlossen, die ausserdem über weitere Eingänge die Syndrome S1, $Sx+1$ und $S3x+2$ erhält. Falls über diese Eingänge der Majoritätsstufe drei oder vier richtige Signale mit Hilfe entsprechender 1-Werte signalisiert werden, dann gibt diese Majoritätsstufe über ihren Ausgang ein 1-Signal ab, mit Hilfe dessen einerseits in der Korrekturstufe KORR eine Signalkorrektur vorgenommen wird. Andererseits wird mit Hilfe der Paritätsstufen PA22, PA23 und PA24 ein auftretender Fehler derart korrigiert, dass er bei der späteren Auswertung der Syndrome nicht mehr stört.

Die vom Syndromregister SR3 abgegebenen Syndrome sind von den Informationsbits, von den Paritätsbits und von deren Fehlern abhängig. Im folgenden Gleichungssystem Nr. 1 sind die Fehler der Informationsbits mit den Bezugszeichen $e^I$ bezeichnet, wogegen die Fehler der Paritätsbits mit dem Bezugszeichen $e^P$ bezeichnet sind. Alle Syndrome sind vom Fehler $e^{I1}$ des Informationsbits I1 abhängig. Im Gegensatz dazu treten die anderen Fehler jeweils nur in einer einzigen Gleichung auf. Falls drei oder vier der Syndrome einen Fehler signalisieren, wird angenommen, dass das Informationsbit I1 fehlerhaft ist. Falls nur zwei der vier Gleichungen Fehler zum Ausdruck bringen, dann wird angenommen, dass diese Fehler nicht durch das Informationsbit I1, sondern durch andere Informationsbits oder Paritätsbits verursacht wurden. Das Gleiche gilt, falls nur eine einzige Gleichung ein fehlerhaftes Ergebnis darstellt. Auf der Basis des Gleichungssystems Nr. 1 lassen sich Fehler eliminieren, die durch Bündelstörungen verursacht wurden, falls zwischen den einzelnen Bündelstörungen mindestens $3x+1$ fehlerfreie Bits auftreten. Wenn beispielsweise die Bits 1 bis x durch eine Bündelstörung gestört sind, dann wird aufgrund des Gleichungssystems Nr. 1 zunächst das Bit I1 korrigiert. In weiterer Folge werden zeitlich nacheinander, aber auch alle weiteren Informationsbits 2 bis x korigiert, weil voraussetzungsgemäss weitere $3x+1$ fehlerfreie Informationsbits und Paritätsbits zur Verfügung stehen.

$$S3x+2 = e^{I1} + e^{Ix+2} + e^{I2x+2} + e^{I3x+2} + e^{P3x+2}$$
$$S2x+1 + S3x+1 = e^{I1} + e^{P2x+1} + e^{I3x+1} + e^{P3x+1}$$
$$Sx+1 = e^{I1} + e^{Ix+1} + e^{Px+1}$$
$$S1 = e^{I1} + e^{P1}$$

*Gleichungssystem Nr. 1:*

Schwierigkeiten sind aber dann zu erwarten, falls einerseits durch Bündelstörungen verursachte Fehler vorausgesetzt werden und andererseits auch Fehler in der Verteilung eines weissen Rauschens zwischen derartigen Bündelstörungen. In diesem Fall sind beispielsweise beim Syndrom S3x+2 auch fehlerhafte Informationsbits Ix+2, I2x+2, I3x+2 zu erwarten.

Die Erfindung beruht auf der Erkenntnis, dass unter den angegebenen Voraussetzungen auf der Grundlage des Gleichungssystems Nr. 1 nur eine unzureichende Fehlerkorrektur möglich ist, weil dieses Gleichungssystem Nr. 1 mehrere Paare nahegelegener Informationsbits und Paritätbits aufweist, die fehleranfällig sind. Beispielsweise sind die Bits I1 und P1 des Syndroms S1 bzw. die Bits Ix+1 und Px+1 des Syndroms Sx+1 bzw. die Bits I3x+1 und P3x+1 bzw. die Bits P2x+1 und I2x+2 bzw. die Bits I3x+2 und P3x+2 weiterer Syndrome nahe beieinander, so dass Fehler wahrscheinlich sind, wenn man keinen fehlerfreien 3x+1 breiten Schutzbereich voraussetzt.

Der Erfindung liegt die Aufgabe zugrunde, durch Bündelstörungen verursachte Fehler auch dann zu korrigieren, falls zwischen diesen Bündelstörungen Fehler auftreten, die gemäss dem weissen Rauschen verteilt sind.

Die der Erfindung zugrundeliegende Aufgabe wird durch die Anwendung der folgenden Merkmale gelöst:

a) Die Anzahl der Zellen des sendeseitigen Schieberegisters ist abhängig von der Anzahl der an die sendeseitige Paritätsstufe angeschlossenen Abgriffe; bei vier bzw. sechs bzw. acht Abgriffen sind mindestens 15x bzw. 41x bzw. 89x Zellen vorgesehen, wobei die Zahl x die Anzahl der Informationsbits angibt, die häufig einer einzigen Bündelstörung angehören.

b) Bei vier bzw. sechs bzw. ab acht Abgriffen sind zwischen diesen Abgriffen entgegengesetzt zur Schieberichtung jeweils ungefähr 4x, 2x, x bzw. 8x, 5x, 4x, 2x, x bzw. 14x, 10x, 8x, 5x, 4x, 2x, x Zellen vorgesehen. Die Bildung einer derartigen Folge von Abständen ist aus US-A Nr. 3227999 bekannt.

c) Ein empfangsseitiges Schieberegister und eine empfangsseitige Paritätsstufe sind gleichartig aufgebaut wie das sendeseitige Schieberegister bzw. die sendeseitige Paritätsstufe.

d) Die Länge des Syndromregisters ist von der Anzahl der Abgriffe abhängig; bei vier bzw. sechs bzw. acht Abgriffen besteht das Syndromregister aus mindestens 7x bzw. 20x bzw. 44x Zellen, deren Abgriffe in den gleichen Abständen wie beim sendeseitigen Schieberegister, aber in bezug zur Schieberichtung gespiegelt angeordnet sind.

e) Die Abgriffe des Syndromregisters sind an die Majoritätsstufe angeschlossen, die das Korrektursignal abgibt, falls mehr Fehler signalisiert werden als keine Fehler.

Die erfindungsgemässe Schaltungsanordnung ermöglicht eine Korrektur von Fehlern, die durch Bündelstörungen verursacht wurden, wobei auch zwischen den Bündelstörungen eine Fehlerstruktur gemäss dem weissen Rauschen vorausgesetzt wird. Diese Fehlerkorrektur ist möglich, weil die Informationsbits und die Paritätsbits die zur Syndrombildung herangezogen werden, einen Mindestabstand von ungefähr x Informationbits bzw. Paritätsbits haben. Fehler, die zwischen den Bündelstörungen erfahrungsgemäss oft nahe aneinanderliegende Bits betreffen, werden daher korrigiert. Ein weiterer Vorteil der vorliegenden Erfindung ist darin zu sehen, dass durch die Wahl der Zahl x eine optimale Anpassung des Fehlerkorrektursystems an den jeweils verwendeten Kanal möglich ist. Auch gemäss Fig. 2 ist eine Wahl der Zahl x möglich und an die Länge der zu erwartenden Bündelstörungen anpassbar. Unter Zugrundelegung der in Fig. 2 dargestellten Schaltungsanordnung muss jedoch die Zahl x immer derart gewählt werden, dass zwischen den Bündelstörungen ein weitgehend störungsfreier Schutzbereich von 3x+1 Bitpaaren erhalten bleibt. Da bei Anwendung der erfindungsgemässen Schaltungsanordnung eine derartige Bedingung nicht erfüllt werden muss, ist die Zahl x in wesentlich optimalerer Weise an den jeweils verwendeten Nachrichtenkanal anpassbar.

Um möglichst viele Fehler zu korrigieren, ist es zweckmässig, dass bei vier bzw. sechs bzw. acht Abgriffen des empfangsseitigen Schieberegisters diese Abgriffe angeschlossen sind an die Zellen mit der Nummer 1, 4x+1, 6x+1, 7x+1 bzw. 1, 8x+1, 13x+1, 17x+1, 19x+1, 20x+1 bzw. 1, 14x+1, 24x+1; 32x+1, 37x+1, 41x+1, 43x+1, 44x+1, wobei die Nummern entgegengesetzt zur Schieberichtung zunehmen.

Auf diese Weise sind zwischen den vier bzw. sechs bzw. acht Abgriffen des sendeseitigen und des empfangsseitigen Schieberegisters genau 4x, 2x, x bzw. 8x, 5x, 4x, 2x, x bzw. 14x, 10x, 8x, 5x, 4x, 2x, x Zellen vorgesehen. Durch diese Massnahme wird erreicht, dass zwischen den Informationsbits und Paritätsbits die zur Syndrombildung herangezogen werden, jeweils mindestens x−1 Informationsbits bzw. Paritätsbits liegen. Die Informationsbits bzw. Paritätsbits, die zur Syndrombildung herangezogen werden, folgen somit in einem relativ grossen Abstand. Mit x=100 ergibt sich beispielsweise mindestens ein Abstand von 99 Informationsbits bzw. Paritätsbits.

In manchen Fällen kann es aus wirtschaftlichen Erwägungen zweckmässig erscheinen, Schieberegister zu verwenden, zwischen deren Abgriffen nicht genau 4x, 2x, x bzw. 8x, 5x, 4x, 2x, x bzw. 14x, 10x, 8x, 5x, 4x, 2x, x Zellen vorgesehen sind. Unter diesen Voraussetzungen sollten die Anzahlen der zwischen den Abgriffen liegenden Zellen nicht mehr als ±10% abweichen von den Anzahlen 4x, 2x, x bzw. 8x, 5x, 4x, 2x, x bzw. 14x, 10x, 8x, 5x, 4x, 2x, x. Durch diese Massnahme wird erreicht, dass trotz der Verwendung nicht optimaler Schieberegister eine im Vergleich zur bekannten Schaltungsanordnung wesentlich verbesserte Fehlerkorrektur möglich ist.

Im folgenden werden Ausführungsbeispiele der Erfindung anhand der Fig. 3 bis 8 beschrieben. In allen Fig. 1 bis 8 dargestellte gleiche Gegenstände sind mit gleichen Bezugszeichen bezeichnet. Es zeigen:

Fig. 3 und 4 ein Korrektursystem, bei dem vier Abgriffe der Schieberegister an Paritätsstufen angeschlossen sind,

Fig. 5 und 6 ein Korrektursystem, bei dem sechs Abgriffe der Schieberegister an Paritätsstufen angeschlossen sind, und

Fig. 7 und 8 ein Korrektursystem, bei dem acht Abgriffe der Schieberegister an Paritätsstufen angeschlossen sind.

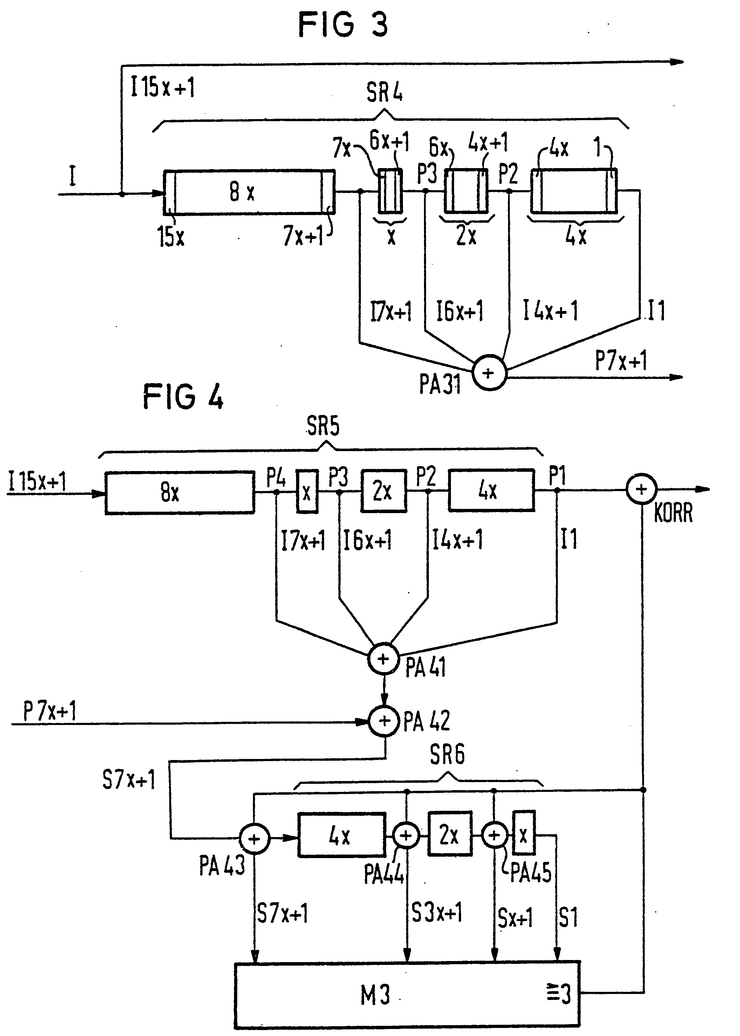

Fig. 3 zeigt eine sendeseitige Schaltungsanordnung, mit Hilfe der eine Nachricht gemäss einem rekurrenten Code mit der Coderate ½ codiert wird. Das Schieberegister SR4 besteht aus insgesamt 15x Zellen. Die Zellen sind entgegengesetzt der Schieberichtung numeriert, beginnend mit der Zelle 1 bis zur Zelle 15x. Zum betrachteten Zeitpunkt wird vom Ausgang der Zelle 1 das Informationsbit I1 abgegriffen. Über den Ausgang der Zelle 4x+1 wird das Informationsbit I4x+1 abgegriffen, über den Ausgang der Zelle 6x+1 wird das Informationsbit I6x+1 abgegriffen und über den Ausgang 7x+1 wird das Informationsbit I7x+1 abgegriffen. Alle diese Abgriffe sind an die Paritätsstufe PA31 angeschlossen, die über ihren Ausgang 'das Paritätsbit P7x+1 abgibt. Es ist ersichtlich, dass zwischen den Abgriffen entgegengesetzt der Schieberichtung genau 4x bzw. 2x bzw. x Zellen des Schieberegisters SR4 vorgesehen sind.

Fig. 4 zeigt eine empfangsseitige Schaltungsanordnung mit dem Schieberegister SR5, das ähnlich ausgebildet ist wie das Schieberegister SR4. Die empfangenen Informationsbits werden diesem Schieberegister zugeführt. Im betrachteten Zeitpunkt wird das Informationsbit I15x+1 zugeführt und über die Abgriffe P1 bzw. P2 bzw. P3 bzw. P4 werden die Informationsbits I1 bzw. I4x+1 bzw. I6x+1 bzw. I7x+1 an die Paritätsstufe PA41 abgegeben. Über den Ausgang dieser Paritätsstufe wird das empfangsseitig errechnete Paritätsbit P7x+1 abgegeben und mit dem empfangenen Paritätsbit P7x+1 in der Paritätsstufe PA42 verglichen. Falls die beiden Paritätsbits gleich sind, signalisiert das von der Paritätsstufe PA42 abgegebene Syndrom S7x+1 keinen Fehler, sind sie nicht gleich, dann signalisiert dieses Syndrom einen Fehler.

Das Syndromregister SR6 besitzt insgesamt 7x Zellen, deren Abgriffe in den gleichen Abständen 4x bzw. 2x bzw. x wie bei den Schieberegistern SR4, SR5, aber in bezug zur Schieberichtung gespiegelt angeordnet sind. Über die Abgriffe des Syndromregisters werden die Syndrome S1, Sx+1, S3x+1, S7x+1 an die Majoritätsstufe M3 abgegeben, die nur dann ein 1-Signal abgibt, falls drei oder vier Syndrome 1-Werte aufweisen. Falls nur ein Syndrom oder nur zwei Syndrome 1-Werte aufweisen, dann gibt die Majoritätsstufe M3 ein 0-Signal über ihren Ausgang ab. Der Ausgang der Majoritätsstufe M3 ist einerseits an die Korrekturstufe KORR und andererseits an die Paritätsstufen PA43, PA44, PA45 angeschlossen. Mit einem 1-Signal am Ausgang der Majoritätsstufe M3 wird einerseits das über die Korrekturstufe KORR abgegebene Signal korrigiert und andererseits werden mit Hilfe der Paritätsstufen PA43, PA44, PA45 jene Syndrome korrigiert, die noch später in der Majoritätsstufe M3 berücksichtigt werden.

$$S7x+1 = e^{I1} + e^{I4x+1} + e^{I6x+1} + e^{I7x+1} + e^{P7x+1}$$
$$S3x+1 = e^{I1} + e^{I2x+1} + e^{I3x+1} + e^{P3x+1}$$
$$Sx+1 = e^{I1} + e^{Ix+1} + e^{Px+1}$$
$$S1 = e^{I1} + e^{P1}$$

*Gleichungssystem Nr. 2:*

Die der Majoritätsstufe M3 zugeführten Syndrome sind von den aus dem Gleichungssystem Nr. 2 ersichtlichen Informationsbits, Paritätsbits und deren Fehler abhängig. Das Syndrom S7x+1 ist von den Informationsbits I1, I4x+1, I6x+1, I7x+1 und vom Paritätsbit P7x+1 abhängig, wie direkt aus Fig. 4 ersichtlich ist. Bei der Bildung dieses Syndroms S7x+1 wird das Informationsbit I1 vom Abgriff P1 abgegeben. Zu einem um 4x früheren Zeitpunkt wurde dieses Informationsbit I1 jedoch über den Abgriff P2 abgegeben, über den Abgriff P3 wurde zu diesem früheren Zeitpunkt das Informationsbit I2x+1 abgegeben und über den Abgriff P4 wurde das Informationsbit I3x+1 abgegeben. Diese drei Informationsbits und das Paritätsbit P3x+1 beeinflussen das Syndrom S3x+1. Das Syndrom Sx+1 berücksichtigt die um 2x Informationsbits früher vorhandenen Zustände. Zu diesem Zeitpunkt wurde über den Abgriff P3 das Informationsbit I1 und über den Abgriff P4 das Informationsbit Ix+1 abgegeben. Ausserdem wurde zu diesem Zeitpunkt das Paritätsbit Px+1 empfangen. Eventuelle Fehler dieser Bits wirken sich im Syndrom Sx+1 aus. Das Syndrom S1 ist schliesslich von eventuellen Fehlern des Informationsbits I1 und des Paritätsbits P1 abhängig.

Das Gleichungssystem Nr. 2 zeigt, dass zur Syndrombildung nur jene Informationsbits bzw. Paritätsbits herangezogen werden, zwischen denen mindestens x−1 Informationsbits bzw. Paritätsbits liegen. Dabei sollten die gleichen Indizes des Paritätsbits P7x+1 und des Informationsbits I7x+1, die beide bei der Bildung des Syndroms S7x+1 beteiligt sind, nicht darüber hinwegtäuschen, dass zwischen diesen beiden Bits 8x−1 Informationsbits bzw. Paritätsbits liegen. Dies deshalb, weil bei der anhand der Fig. 3 ersichtlichen Einspeisung der Informationsbits bzw. Paritsbits das Informationsbit I15x+1 und das Paritätsbit P7x+1 zeitlich einander folgen, so dass zwischen Informationsbits und Paritätsbits mit gleichem Index 8x−1 Bits liegen.

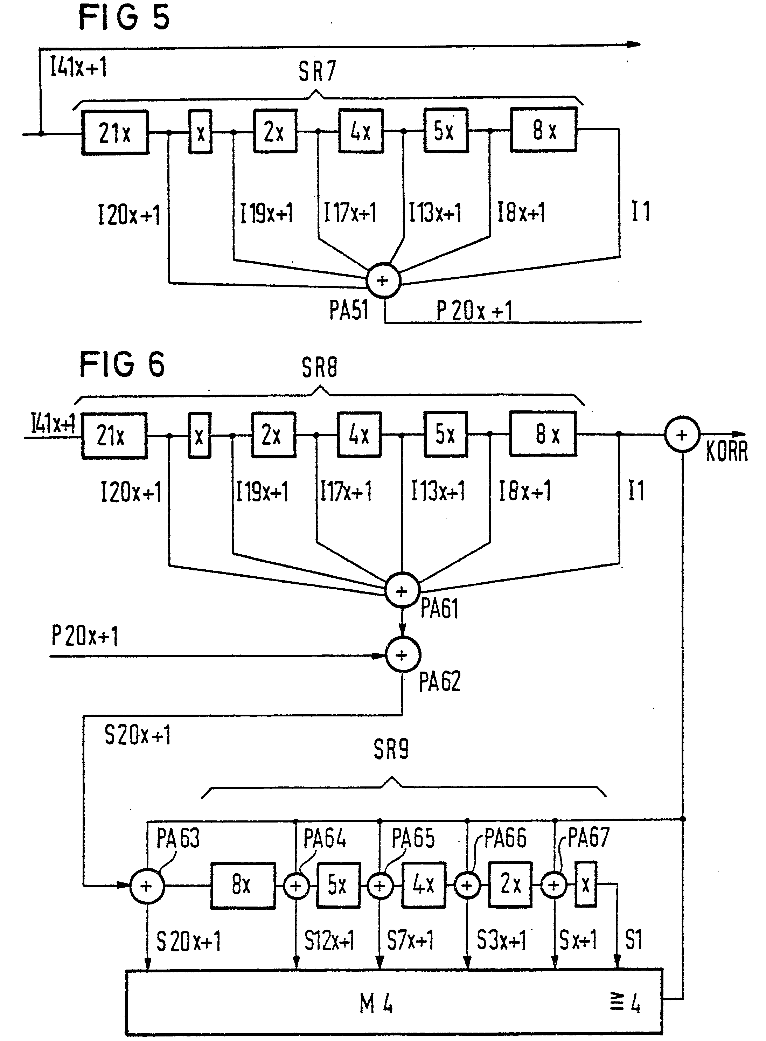

Fig. 5 zeigt das Schieberegister SR7, über dessen Abgriffe die Informationsbits I1, I8x+1, I13x+1, I17x+1, I19x+1 und I20x+1 abgegeben werden. Das Schieberegister SR7 besteht aus insgesamt 41x Zellen. Entgegengesetzt zur Schieberichtung sind die Teile des Schieberegisters 8x, 5x, 4x, 2x, x, 21x eingezeichnet. Mit Hilfe der Paritätsstufe PA51 wird das Paritätsbit P20x+1 gewonnen und sendeseitig abgegeben.

Fig. 6 zeigt die empfangsseitige Schaltungsanordnung, der einerseits das Informationsbits I41x+1 und andererseits das empfangene Paritätsbit P20x+1 zugeführt werden. Das empfangsseitige Schieberegister SR8 gleicht dem sendeseitigen Schieberegister SR7. Über die Abgriffe des empfangsseitigen Schieberegisters SR8 werden die gleichen Informationsbits I1 bis I20x+1 abge-

geben. Mit Hilfe der Paritätsstufe PA61 wird empfangsseitig das Paritätsbit P20x+1 errechnet und mit dem empfangenen Paritätsbit P20x+1 verglichen. Das Ergebnis dieses Vergleiches wird von der Paritätsstufe PA62 als Syndrom S20x+1 abgegeben. Die 0-Werte dieses Syndroms signalisieren keinen Fehler, wogegen 1-Werte dieses Syndroms jeweils Fehler signalisieren.

Das Syndrom S20x+1 wird dem Syndromregister SR9 zugeführt, das mit seinen 20x Zellen ebensoviele Zellen aufweist, wie Teile der Schieberegister SR7 und SR8. Die Abgriffe des Syndromregisters SR9 sind aber in Schieberichtung gespiegelt zu den entsprechenden Abgriffen der Schieberegister SR7 und SR8. Über diese Abgriffe werden die Syndrome S1, Sx+1, S3x+1, S7x+1, S12x+1 und S20x+1 an die Majoritätsstufe M4 abgegeben. Alle diese Syndrome können entweder 0-Werte oder 1-Werte annehmen. Falls vier oder fünf oder sechs dieser Syndrome 1-Werte annehmen, dann gibt die Majoritätsstufe M4 über ihren Ausgang ein 1-Signal ab, welches in der Korrekturstufe KORR und mit Hilfe der Paritätsstufen PA63, pA64, pA65, PA66, PA67 Korrekturen der fehlerhaften Bits bewirkt. Falls die der Majoritätsstufe M4 zugeführten Syndrome nur drei oder weniger 1-Werte signalisieren, dann wird über den Ausgang der Majoritätsstufe M4 ein 0-Signal abgegeben, welches keinerlei Signalkorrektur bewirkt.

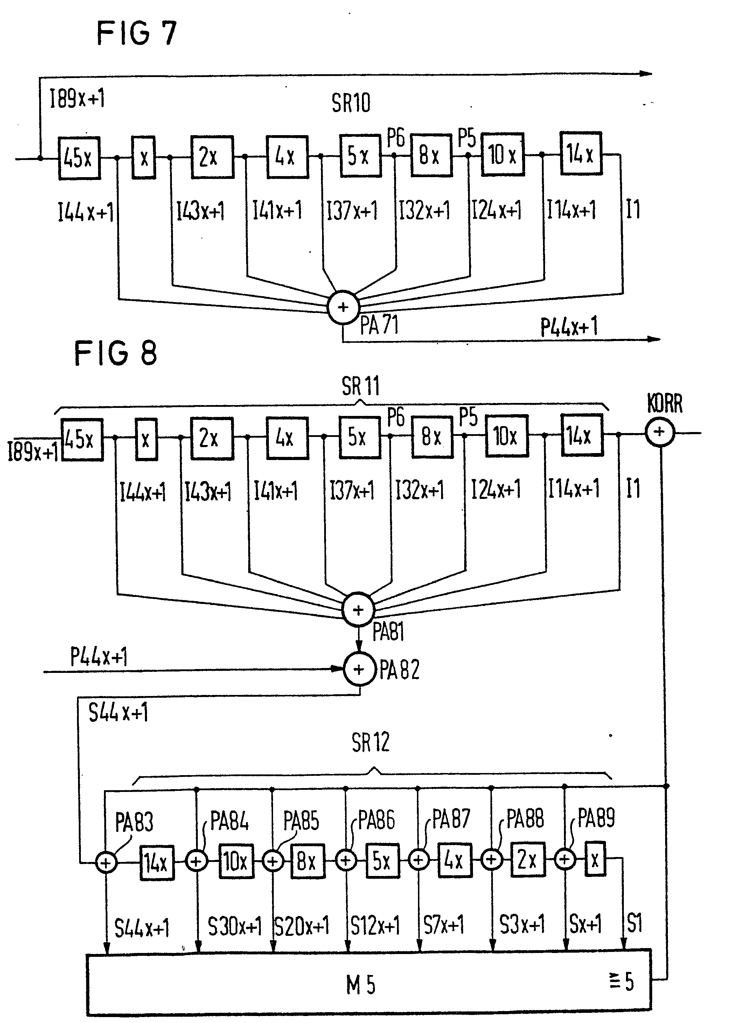

Fig. 7 zeigt ein weiteres Ausführungsbeispiel eines sendeseitigen Codierers, bei dem acht Abgriffe des Schieberegisters SR10 an die Paritätsstufe PA71 angeschlossen sind. Über die Abgriffe werden im dargestellten Zeitpunkt die Informationsbits I1, I14x+1, I24x+1, I32x+1, I37x+1, I41x+1, I43x+1 und I44x+1 abgegeben. Im dargestellten Zeitpunkt wird über den Ausgang der Paritätsstufe PA71 das Paritätsbit P44x+1 abgegeben. Das Schieberegister SR10 besteht aus insgesamt 89x Zellen, die entgegengesetzt zur Schieberichtung in die Gruppen 14x, 10x, 8x, 5x, 4x, 2x, x und 45x gruppiert werden können.

Fig. 8 zeigt das empfangsseitige Schieberegister SR11, das dem sendeseitigen Schieberegister SR10 gleicht und welchem das Informationsbit I89x+1 zugeführt wird. Im betrachteten Zeitpunkt werden über die Abgriffe des Schieberegisters SR11 die gleichen Informationsbits abgegeben, wie auf der Sendeseite. Mit Hilfe der Paritätsstufe PA81 wird auf der Empfangsseite das Paritätsbit P44x+1 errechnet und mit dem empfangenen Paritätsbit P44x+1 verglichen. Als Ergebnis dieses Vergleiches wird von der Paritätsstufe PA82 das Syndrom S44x+1 abgegeben. 0-Werte bzw. 1-Werte dieses Syndroms signalisieren keinen Fehler bzw. einen Fehler.

Das Syndromregister SR12 besteht aus insgesamt 44x Zellen, deren Abgriffe aber nunmehr in bezug auf die Schieberichtung gespiegelt angeordnet sind, im Vergleich zu den Abgriffen der Schieberegister SR10 und SR11. Der Majoritätsstufe M5 werden die Syndrome S1, Sx+1, S3x+1, S7x+1, S12x+1, S20x+1, S30x+1, S44x+1 zugeführt. Falls fünf oder mehr dieser Syndrome 1-Werte signalisieren, wird über den Ausgang der Majoritätsstufe M5 ein 1-Signal abgegeben und damit wird einerseits mit Hilfe der Korrekturstufe KORR und andererseits mit Hilfe der Paritätsstufen P83, PA84, PA85, PA86, PA87, PA88, PA89 eine Korrektur vorgenommen. Falls nur vier oder weniger 1-Werte der Syndrome S1 bis S44x+1 vorliegen, dann gibt die Majoritätsstufe M5 ein 0-Signal über ihren Ausgang ab, das keine Korrektur zur Folge hat. Wenn die Informationsbits und die Syndrome in der anhand der Fig. 3 und 4 bzw. 5 und 6 bzw. 7 und 8 bei vier bzw. sechs bzw. acht Abgriffen abgegriffen werden, dann ergeben sich die günstigsten Voraussetzungen zur Fehlerkorrektur. Dies deshalb, weil dann mit relativ grossen Abständen jener Informationsbit und Paritätsbits zu rechnen ist, die die Syndrome beeinflussen. Diesbezügliche Beispiele wurden bereits anhand des Gleichungssystems Nr. 2 erläutert. Es wäre aber beispielsweise denkbar, dass unter Bezugnahme auf die Fig. 3 und 4 Schieberegister preisgünstig verfügbar wären, bei denen zwischen den Abgriffen P2 und P3 nicht 2x Zellen, sondern 2x+50 Zellen vorgesehen sind. In diesem Fall ergibt sich anstelle des Gleichungssystems Nr. 2 das Gleichungssystem Nr. 3.

$$S7x+51 = e^{I1} + e^{I4x+1} + e^{I6x+51} + e^{I7x+51} + e^{P7x+51}$$
$$S3x+51 = e^{I1} + e^{I2x+51} + e^{I3x+51} + e^{P3x+51}$$
$$Sx+1 = e^{I1} + e^{Ix+1} + e^{Px+1}$$
$$S1 = e^{I1} + e^{P1}$$

*Gleichungssystem Nr. 3:*

Im Fall des Gleichungssystems Nr. 2 liegen zwischen den Informationsbits I4x+1 und I3x+1 insgesamt x−1 Bits, wogegen im Fall des Gleichungssystems Nr. 3 zwischen den Informationsbits I4x+1 und I3x+51 insgesamt x−51 Bits liegen. Wenn beispielsweise x=100 angenommen wird, dann liegen unter Zugrundelegung des Gleichungssystems Nr. 2 insgesamt 99 Bits, zwischen den Informationsbits I401 und I301, wogegen im Fall des Gleichungssystems Nr. 3 zwischen den Informationsbits I401 und I351 insgesamt 49 Bits liegen. Unter Zugrundelegung des Gleichungssystems Nr. 3 haben sich also die Abstände einzelner Bits verringert. Um die Abstände zwischen den einzelnen Bits nicht allzu sehr zu verringern, ist es zweckmässig, dass zwischen den Abgriffen P2 und P3 mit x=100 höchstens 2x+10% = 200+20 = 220 und mindestens 2x−10% = 200−20 = 180 Zellen vorgesehen sind.

## Patentansprüche

1. Schaltungsanordnung zur Korrektur von Daten, wobei Informationsbits einem sendeseitigen Schieberegister zugeführt werden, das über mehrere Abgriffe an eine sendeseitige Paritätsstufe angeschlossen ist, die gemäss einem rekurrenten Code codierte sendeseitige Paritätsbits abgibt, wobei Folgen von Informationsbits und Paritätsbits zur Empfangsseite übertragen und mit Hilfe eines Syndromregisters und einer Majoritätsstufe ein Korrektursignal gewonnen und einzelne Informationsbits korrigiert werden, gekennzeichnet durch die Anwendung der folgenden Merkmale:

a) Wenn mindestens vier Abgriffe des sendeseitigen Schieberegisters (SR4 bzw. SR7 bzw. SR10) an die sendeseitige Paritätsstufe (PA31 bzw. PA51 bzw. PA71) angeschlossen sind, besteht das sendeseitige Schieberegister aus mindestens 15x Zellen, wobei die Zahl x die Anzahl der Informationsbits (I) angibt, die häufig einer einzigen Bündelstörung angehört.

b) Zwischen den mindestens vier Abgriffen des sendeseitigen Schieberegisters sind entgegengesetzt zur Schieberichtung ungefähr 4x, 2x, x Zellen vorgesehen.

c) Ein empfangsseitiges Schlieberegister (SR5 bzw. SR8 bzw. SR11) und eine empfangsseitige Paritätsstufe (PA41 bzw. PA 61 bzw. PA81,) sind gleichartig aufgebaut, wie das sendeseitige Schieberegister bzw. die sendeseitige Paritätsstufe.

d) Bei mindestens vier Abgriffen des sendeseitigen Schieberegisters besteht das Syndromregister aus mindestens 7x Zellen, deren Abgriffe in den gleichen Abständen wie beim sendeseitigen Schieberegister, aber in bezug zur Schieberichtung gespielgelt angeordnet sind.

e) Die Abgriffe des Syndromregisters sind an die Majoritätsstufe (M3 bzw. M4 bzw. M5) angeschlossen, die das Korrektursignal abgibt, falls mehr Fehler signalisiert werden als keine Fehler (Fig. 3 und 4 bzw. 5 und 6 bzw. 7 und 8).

2. Schaltungsanordnung nach Anspruch 1, gekennzeichnet durch die Anwendung der folgenden Merkmale:

f) Wenn mindestens sechs Abgriffe des sendeseitigen Schieberegisters (SR7 bzw. SR10) an die sendeseitige Paritätsstufe (PA51 bzw. PA71) angeschlossen sind, besteht das sendeseitige Schieberegister aus mindestens 41x Zellen.

g) Zwischen den mindestens sechs Abgriffen des sendeseitigen Schieberegisters sind entgegengesetzt zur Schieberichtung jeweils ungefähr 8x, 5x, 4x, 2x, x Zellen vorgesehen.

h) Bei mindestens sechs Abgriffen des sendeseitigen Schieberegisters besteht das Syndromregister aus mindestens 20x Zellen. (Fig. 5 und 6 bzw. 7 und 8).

3. Schaltungsanordnung nach Anspruch 1, gekennzeichnet durch die Anwendung der folgenden Merkmale:

k) Wenn mindestens acht Abgriffe des sendeseitigen Schieberegisters (SR10) an die sendeseitige Paritätsstufe (PA71) angeschlossen sind, besteht das sendeseitige Schieberegister aus mindestens 89x Zellen.

l) Zwischen den mindestens acht Abgriffen des sendeseitigen Schieberegisters sind entgegengesetzt zur Schieberichtung ungefähr 14x, 10x, 8x, 5x, 4x, 2x, x Zellen vorgesehen.

m) Bei mindestens acht Abgriffen des sendeseitigen Schieberegisters besteht das Syndromregister aus mindestens 44x Zellen.

4. Schaltungsanordnung nach Anspruch 1, dadurch gekennzeichnet, dass die Anzahlen der zwischen den mindestens vier Abgriffen liegenden Zellen nicht mehr als $\pm 10\%$ abweichen von den Anzahlen 4x, 2x, x.

5. Schaltungsanordnung nach Anspruch 2, dadurch gekennzeichnet, dass die Anzahlen der zwischen den mindestens sechs Abgriffen liegenden Zellen nicht mehr als $\pm 10\%$ abweichen von den Anzahlen 8x, 5x, 4x, 2x, x.

6. Schaltungsanordnung nach Anspruch 3, dadurch gekennzeichnet, dass die Anzahlen der zwischen den mindestens acht Abgriffen liegenden Zellen nicht mehr als $\pm 10\%$ abweichen von den Anzahlen 14x, 10x, 8x, 5x, 4x, 2x, x.

**Claims**

1. Circuit arrangement for correction of data, wherein information bits are fed to a transmitting-end shift register which is connected via a plurality of tappings to a transmitting-end parity stage which emits coded, transmitting-end parity bits in accordance with a recurrent code, wherein sequences of information bits and parity bits are transmitted to the receiving end and a correcting signal is obtained with the aid of a syndrome register and a majority stage, and individual information bits are corrected, characterised by the application of the following features:

a) When at least four tappings of the transmitting-end shift register (SR4 or SR7 or SR10) are connected to the transmitting-end parity stage (PA31 or PA51 or PA71), the transmitting-end shift register consists of at least 15x cells where the number x indicates the number of information bits (I) which frequently belongs to one single group disturbance.

b) Between the minimum of four tappings of the transmitting-end shift register, there are provided approximately 4x, 2x, x cells oppositely to the shift direction.

c) A receiving-end shift register (SR5 or SR8 or SR11) and a receiving-end parity stage (PA41, PA42 or PA61, PA62 or PA81, PA82) are of similar construction to the transmitting-end shift register and transmitting-end parity stage respectively.

d) When the transmitting-end shift register has a minimum of four tappings, the syndrome register consists of at least 7x cells whose tappings are arranged at the same intervals as in the transmitting-end shift register but in reverse relative to the direction of shift.

e) The tappings of the syndrome register are connected to the majority stage (M3 or M4 or M5) which emits the correcting signal if more errors than no errors are signalled (Figs. 3 and 4 or 5 and 6 or 7 and 8).

2. Circuit arrangement as claimed in claim 1, characterised by the application of the following features:

f) When at least six tappings of the transmitting-end shift register (SR7 or SR10) are connected to the transmitting-end parity stage (PA51 or PA71), the transmitting-end shift register consists of at least 41x cells.

g) Between the minimum of six tappings of the transmitting-end shift register, approximately 8x, 5x, 4x, 2x, x cells are provided oppositely to the shift direction.

h) When the transmitting-end shift register has a minimum of six tappings the syndrome register consists of at least 20x cells (Figs. 5 and 6 or 7 and 8).

3. Circuit arrangement as claimed in claim 1, characterised by the application of the following features:

k) When at least eight tappings of the transmitting-end shift register (SR10) are connected to the transmitting-end parity stage (PA71), the transmitting-end shift register consistsof at least 89x cells.

l) Between the minimum of eight tappings of the transmitting-end shift register, approximately 14x, 10x, 8x, 5x, 4x, 2x, x cells are provided oppositely to the direction of shift.

m) When the transmitting-end shift register has a minimum of eight tappings the syndrome register consists of at least 44x cells.

4. Circuit arrangement as claimed in claim 1, characterised in that the numbers of cells arranged between the minimum of four tappings differ by no more than $\pm$10% from the numbers 4x, 2x, x.

5. Circuit arrangement as claimed in claim 2, characterised in that the numbers of the cells arranged between the minimum of six tappings differ by no more than $\pm$10% from the numbers 8x, 5x, 4x, 2x, x.

6. Circuit arrangement as claimed in claim 3, characterised in that the numbers of the cells arranged between the minimum of eight tappings differ by no more than $\pm$10% from the numbers 14x, 10x, 8x, 5x, 4x, 2x, x.

**Revendications**

1. Montage pour la correction de données, du type dans lequel des bits d'information sont appliqués à un registre à décalage situé du côté émission et relié par l'intermédiaire de plusieurs prises à un étage de parité situé du côté émission, et émettant des bits de parité côté émission qui sont codés suivant un code récurrent, des séquences de bits d'information et de bits de parité étant transmises au côté réception, alors qu'un signal de correction est obtenu à l'aide d'un registre syndrome et d'un étage majoritaire et que des bits individuels d'information sont corrigés, caractérisé par la mise en œuvre des particularités suivantes:

a) si au moins quatre prises du registre à décalage (SR4 ou SR7 ou SR10) situées du côté émission sont reliées à l'étage de parité situé du côté émission (PA31 ou PA51 ou PA71), le registre à décalage situé du côté émission est constitué par au moins 15x cellules, x étant le nombre de bits d'information (I) appartenant souvent à une seule perturbation en rafales;

b) entre au moins les quatre prises du registre à décalage prévu du côté émission, il est prévu, en sens inverse de la direction de décalage, environ 4x, 2x, x cellules;

c) un registre à décalage (SR5 ou SR8 ou SR11) situé du côté réception et un étage de parité (PA41, PA42 ou PA61, PA62 ou PA81, PA82) situé du côté réception sont constitués de façon similaire au registre à décalage côté émission ou à l'étage de parité situé côté émission;

d) si le registre à décalage côté émission comporte au moins quatre prises, le registre syndrome est constitué par au moins 7x cellules dont les prises sont disposées à des distances identiques à celles du registre à décalage côté émission, mais suivant une disposition spéculaire par rapport à la destination de décalage;

e) les prises du registe syndrome sont reliées à l'étage majoritaire (M3 ou M4 ou M5) émettant le signal de correction si davantage d'erreurs sont signalées qu'aucune erreur (fig. 3 et 4 ou 5 et 6 ou 7 et 8).

2. Montage selon la revendication 1, caractérisé par la mise en œuvre des particularités suivantes:

f) si au moins six prises du registre à décalage situé du côté émission (SR7 ou SR10) sont reliées à l'étage de parité (PA51 ou PA71) situé du côté émission, le registre à décalage situé du côté émission est constitué par au moins 41x cellules;

g) entre les six prises au moins du registre à décalage situé du côté émission, il est prévu, en sens opposé à la direction du décalage, respectivement 8x, 5x, 4x, 2x, x cellules environ;

h) pour six prises au moins du registre à décalage situé du côté émission, le registre syndrome est constitué par au moins 20x cellules (fig. 5 et 6 ou 7 et 8).

3. Montage selon la revendication 1, caractérisé par la mise en œuvre des particularités suivantes:

k) si au moins huit prises du registre à décalage (SR10) situé du côté émission, sont reliées à l'étage de parité (PA71) situé du côté émission, le registre à décalage situé du côté émission est constitué par au moins 89x cellules;

l) entre les huit prises au moins du registre à décalage situé du côté émission, il est prévu, en sens opposé à la direction de décalage, environ 14x, 10x, 8x, 5x, 4x, 2x, x cellules;

m) pour au moins huit prises du registre à décalage situé du côté émission, le registre syndrome est constitué par au moins 44x cellules.

4. Montage selon la revendication 1, caractérisé par le fait que le nombre de cellules qui se situent entre au moins quatre prises ne présente pas un écart supérieur à $\pm$10% des nombres 4x, 2x, x.

5. Montage selon la revendication 2, caractérisé par le fait que le nombre de cellules qui se situent entre au moins six prises ne présente pas un écart supérieur à $\pm$10% des nombres 8x, 5x, 4x, 2x, x.

6. Montage selon la revendication 3, caractérisé par le fait que le nombre de cellules qui se situent entre au moins huit prises ne présente pas un écart supérieur à $\pm$10% des nombres 14x, 10x, 8x, 5x,

# FIG 1

SR1

$3x+1$  $2x+2$  $2x+1$  $x+2$  $x+1$  $1$

$I3x+2$

$x$  $x$  $x+1$

$I3x+2$  $I2x+2$  $Ix+2$  $I1$

PA1  $+$  $P3x+2$

# FIG 2

SR2

$I3x+2$

$x$  $x$  $x+1$

$I3x+2$  $I2x+2$  $Ix+2$  $I1$

KORR  $+$

$+$ PA 21

$P3x+2$

$S3x+2$

SR3

PA 22  $+$

$1$  $x$ PA23  $x$ PA24  $x$

$S3x+2$  $S3x+1$  $S2x+1$  $Sx+1$  $S1$

$+$ PA 25

M  $>2$

# FIG 3

# FIG 4

FIG 5

FIG 6

0 011 749

13

## FIG 7

## FIG 8